# EUROPÄISCHE PATENTANMELDUNG

(11) **EP 4 019 814 A1**
(43) Veröffentlichungstag der Anmeldung: **29.06.2022**
(21) Anmeldenummer: 21213925.7
(22) Anmeldetag: 13.12.2021
(51) Int. Cl.: F16K 1/02, F16K 1/30, F16K 1/48, F16K 41/10, F17C 13/04

(54) **VENTIL FÜR FLUIDLEITUNG MIT VERBESSERTER SPINDEL**

(30) Priorität: 17.12.2020 DE 102020134025
(71) Anmelder: ArianeGroup GmbH, 82024 Taufkirchen (DE)
(72) Erfinder: Unrath, Dieter, 74706 Osterburken (DE); Mantel, Erwin, 74219 Möckmühl (DE)
(74) Vertreter: Schornack, Oliver

(57) **Zusammenfassung**

Es wird ein Ventil (100) für eine Fluidleitung (200) beschrieben, das einen Ventilsitz (115), einen Spindelteller (153), der dazu eingerichtet ist, von einer Schließstellung, in der der Spindelteller (153) fluiddicht auf dem Ventilsitz (115) aufsitzt, zu einer Offenstellung, in der der Spindelteller (153) von dem Ventilsitz (115) entfernt ist, bewegt zu werden, einen ersten Spindelteil (151), an dem der Spindelteller (153) ausgebildet ist, und einen zweiten Spindelteil (152), der auf einer dem Spindelteller (153) gegenüberliegenden Seite des ersten Spindelteils (151) angeordnet ist, umfasst. Ferner weist der erste Spindelteil (151) oder der zweite Spindelteil (152) eine dem jeweils anderen Spindelteil (151, 152) zugewandte erste Vertiefung (301) auf. Des Weiteren ist ein zumindest teilweise sphärisches Element (310) in der ersten Vertiefung (301) angeordnet, das dazu eingerichtet ist, sich relativ zu der ersten Vertiefung (301) zu drehen.

## Beschreibung

Die Erfindung betrifft ein Ventil für eine Fluidleitung mit verbesserter Spindel. Insbesondere betrifft die Erfindung ein Ventil für eine Fluidleitung mit einer zweigeteilten Spindel, die einen Spindelteller bewegt, wobei zwischen den beiden Teilen der Spindel ein zumindest teilweise sphärisches Element angeordnet ist.

Bekannte Ventile für Fluidleitungen und Druckbehälter weisen für gewöhnlich eine Spindel auf, die durch Drehbetätigung eines Aktuators in ihrer Längsrichtung bewegt wird. Ein an einem Ende der Spindel angeordneter Spindelteller dreht dabei zusammen mit der Spindel und wird auf einen Ventilsitz gedrückt. Manche Spindelteller sind mit einem Elastomer beschichtet, um die Dichtwirkung am Ventilsitz zu erhöhen. Durch die Drehung des Spindeltellers wird jedoch das Elastomer zusätzlich belastet, wodurch dessen Lebensdauer und/oder Dichtheit reduziert ist.

Vor diesem Hintergrund liegt der vorliegenden Erfindung die Aufgabe zugrunde, ein Ventil mit verbesserter Spindel bereitzustellen.

Diese Aufgabe wird durch ein Ventil mit den Merkmalen des Anspruchs 1 gelöst.

Gemäß einem ersten Aspekt zum besseren Verständnis der vorliegenden Offenbarung umfasst ein Ventil für eine Fluidleitung einen Ventilsitz und einen Spindelteller, der dazu eingerichtet ist, von einer Schließstellung, in der der Spindelteller fluiddicht auf dem Ventilsitz aufsitzt, zu einer Offenstellung, in der der Spindelteller von dem Ventilsitz entfernt ist, bewegt zu werden. Ferner umfasst das Ventil einen ersten Spindelteil, an dem der Spindelteller ausgebildet ist, und einen zweiten Spindelteil, der auf einer dem Spindelteller gegenüberliegenden Seite des ersten Spindelteils angeordnet ist. Mit anderen Worten haben die beiden Spindelteile im Wesentlichen dieselbe Längsachse, wobei an einem Ende des ersten Spindelteils der Spindelteller ausgebildet ist.

Zudem weist der erste Spindelteil oder der zweite Spindelteil eine dem jeweils anderen Spindelteil zugewandte erste Vertiefung auf. Insbesondere weist der entsprechende Spindelteil eine Vertiefung in einer Stirnseite auf, wobei die Stirnseite dem anderen Spindelteil zugewandt ist. In dieser ersten Vertiefung ist des Weiteren ein zumindest teilweise sphärisches Element angeordnet, das dazu eingerichtet ist, sich relativ zu der ersten Vertiefung zu drehen. Die teilweise sphärische Form ist dabei in der ersten Vertiefung angeordnet.

Durch die teilweise sphärische Form wird die Auflagefläche zwischen diesem Element und der ersten Vertiefung auf wenige Punkte oder eine ringförmige Auflage beschränkt. Dadurch lassen sich die beiden Spindelteile gegeneinander leicht verdrehen. Dies führt insbesondere dazu, dass der zweite Spindelteil gedreht werden kann, während der erste Spindelteil die Drehbewegung nicht übernimmt. Das Element mit der teilweise sphärischen Form und die erste Vertiefung bilden ein Gleitlager für diese Drehbewegung des zweiten Spindelteils. Zudem können kleine Bewegungen eines Spindelteils, bei denen der Spindelteil von seiner Ausrichtung entlang der Längsachse abweicht (Kippen) ebenfalls von dem anderen Spindelteil entkoppelt werden. Solche kleinen Bewegungen können beispielsweise durch ein Spiel im Lager des entsprechenden Spindelteils, insbesondere bei Betätigung des Ventils, oder bei geöffnetem Ventil durch Strömungen des Fluids am Fluidteller erzeugt werden.

Dadurch kann der Spindelteller lediglich in Längsrichtung des ersten Spindelteils bewegt werden, und ohne Drehbewegung auf den Ventilsitz aufgesetzt werden. Ebenso können Kippbewegungen mindestens eines der Spindelteller gekoppelt werden, wodurch der Spindelteil mit dem Spindelteller in seiner Längsrichtung besser ausgerichtet werden kann. Der Spindelteller und etwaige daran angeordnete Dichtelemente werden dadurch insgesamt geschont und ihre Lebensdauer erhöht.

In einer Implementierungsvariante kann das zumindest teilweise sphärische Element eine Kugel sein. Dadurch ist es möglich, dass das teilweise sphärische Element auch gegenüber dem anderen des ersten oder zweiten Spindelteils nur mit wenigen Punkten oder einer ringförmigen Auflagefläche in Berührung kommt. Dadurch wird eine Reibung zwischen erstem und zweitem Spindelteil deutlich reduziert, und die Drehbewegung des zweiten Spindelteils von dem ersten Spindelteil entkoppelt. Ferner werden bei Belastungen durch unterschiedliche Temperaturen und wechselnde Drücke zwischen den beiden Spindelteil besser übertragen. Eine Kugel weist hierbei eine hohe Beständigkeit und geringe Verformung gegenüber solchen wechselnden Belastungen auf, die insbesondere bei geöffnetem Ventil und der Durchströmung mit sich entspannendem (ausdehnendem) Fluid und/oder (tief-) gekühltem Fluid auftreten.

Zum Beispiel kann das andere des ersten oder zweiten Spindelteils eine zweite Vertiefung aufweisen, in der die Kugel angeordnet ist. Dies ermöglicht einen sehr einfachen Aufbau der Spindel, da die Kugel in den beiden sich gegenüberliegenden Vertiefungen liegt und gehalten wird. Beispielsweise können die beiden Vertiefungen gleich dimensioniert sein, sodass auch die dazwischenliegende Kugel gleichmäßig belastet wird und in etwa gleiche Auflageflächen zum ersten Spindelteil und zum zweiten Spindelteil entstehen.

In einer anderen Implementierungsvariante kann das zumindest teilweise sphärische Element an einem der ersten Vertiefung zugewandten Ende des anderen des ersten oder zweiten Spindelteils ausgebildet sein. Ist beispielsweise die erste Vertiefung an dem zweiten Spindelteil vorgesehen, kann das zumindest teilweise sphärische Element an einem Ende des ersten Spindelteils ausgebildet sein, dass dem Spindelteller gegenüberliegt. Zum Beispiel kann das Ende des entsprechenden Spindelteils abgerundet sein, sodass der Spindelteil selbst das zumindest teilweise sphärische Element bildet.

Das zumindest teilweise sphärische Element kann aus dem Material des entsprechenden Spindelteils gefertigt werden, beispielsweise kaltgeformt, gefräst oder dergleichen sein. Alternativ kann das zumindest teilweise sphärische Element auf den entsprechenden Spindelteil aufgesetzt und dort befestigt werden, beispielsweise aufgeschraubt, geklebt, geschweißt oder dergleichen. Diese Variante ist sehr einfach umzusetzen, da keine zusätzlichen Bauteile zwischen erstem und zweitem Spindelteil eingesetzt werden müssen. Der Aufbau des Ventils dabei nur geringfügig verändert, und die Herstellung des Ventils bleibt einfach.

In einer weiteren Implementierungsvariante kann das Ventil ferner einen ersten Gehäuseabschnitt, der den Ventilsitz bildet, und einen zweiten Gehäuseabschnitt, der an einem dem Ventilsitz zugewandten Ende einen Flansch aufweist, umfassen. Die Gehäuseabschnitte können in ihrer Längserstreckung (Länge in Richtung ihre Längsachse) unabhängig von dem ersten und zweiten Spindelteil ausgebildet sein.

Ferner kann das Ventil einen Druckring umfassen, der dazu eingerichtet ist, an dem ersten Gehäuseabschnitt befestigt zu werden, den zweiten Gehäuseabschnitt zumindest abschnittsweise zu umgeben und den Flansch des zweiten Gehäuseabschnitts in Richtung des ersten Gehäuseabschnitts zu halten. Durch die zwei Gehäuseabschnitte lässt sich die mehrteilige Spindel leicht in die Gehäuseabschnitte einsetzen und das Ventil einfach zusammenbauen.

In noch einer weiteren Implementierungsvariante kann der zweite Spindelteil in dem zweiten Gehäuseabschnitt so gelagert sein, dass er durch Drehen eine Bewegung in Längsrichtung des zweiten Spindelteils ausführt. Beispielsweise kann der zweite Gehäuseabschnitt ein Gewinde aufweisen, in dem ein korrespondierendes Gewinde des zweiten Spindelteils eingreift. Durch Drehen des zweiten Spindelteils in dem Gewinde wird der zweite Spindelteil in Längsrichtung des zweiten Spindelteils bewegt. Dadurch kann die Spindel zum Öffnen und Schließen des Ventils leicht auf und ab bewegt werden.

In einer Implementierungsvariante kann der erste Spindelteil in dem ersten Gehäuseabschnitt und/oder dem zweiten Gehäuseabschnitt so gelagert sein, dass er sich in Längsrichtung des ersten Gehäuseabschnitts bewegt. Eine Drehbewegung des ersten Spindelteils ist nicht notwendig. Insbesondere kann das zumindest teilweise sphärische Element und die erste Vertiefung die Bewegung des zweiten Spindelteils in dessen Längsrichtung auf den ersten Spindelteil übertragen und die Drehbewegung des zweiten Spindelteils nicht auf den ersten Spindelteil übertragen. Zum Beispiel liegt das zumindest teilweise sphärische Element an der ersten Vertiefung an und kann insbesondere eine Kraft in Längsrichtung des ersten und zweiten Spindelteils übertragen. Durch die geringe Reibung in Rotationsrichtung des zweiten Spindelteils (Richtung der Drehbewegung in dem Gewinde) zwischen zumindest teilweise sphärischem Element und erster Vertiefung wird die Drehbewegung zwischen erstem und zweitem Spindelteil entkoppelt und nicht übertragen.

In einer anderen Implementierungsvariante kann das Ventil ferner einen Dichtkranz umfassen, der eine Öffnung, durch die der erste Spindelteil ragt, und eine Dichtfläche, die ein dem Ventilsitz gegenüberliegendes Ende des ersten Gehäuseabschnitts fluiddicht verschließt, aufweist. Die Öffnung in dem Dichtkranz kann auch als Gleitlager für den ersten Spindelteil dienen. Beispielsweise kann sich der Dichtkranz in Längsrichtung des ersten Spindelteils soweit erstrecken, dass der erste Spindelteil sich von seiner Lage in Richtung seiner Längsachse nicht oder nur marginal wegbewegen lässt (ein Kippen des ersten Spindelteils wird verhindert oder zumindest verringert). Dadurch kann ein sicheres Aufsetzen des Spindeltellers auf dem Ventilsitz zur Erreichung seiner Schliessstellung gewährleistet werden.

Zudem dichtet der Dichtkranz eine Ventilkammer im Inneren des ersten Gehäuseabschnitts hermetisch ab. Auch kann der Dichtkranz so gestalten sein, dass der Flansch des zweiten Gehäuseabschnitts auf dem Dichtkranz aufliegt und durch den Druckring auf den Dichtkranz gedrückt wird. Damit lässt sich auch ein Innenraum des zweiten Gehäuseabschnitts hermetisch abdichten, wobei der Aufbau des Ventils dennoch einfach bleibt.

Beispielsweise kann der Druckring so geformt sein, dass der Flansch des zweiten Gehäuseabschnitts, wenn der Druckring an dem ersten Gehäuseabschnitt befestigt ist, auf einer der Dichtfläche des Dichtkranzes gegenüberliegenden Seite des Dichtkranzes anliegt und der Dichtkranz zwischen dem Flansch und dem dem Ventilsitz gegenüberliegenden Ende des ersten Gehäuseabschnitts eingeklemmt ist.

Mit anderen Worten ist eine im Inneren des Druckrings vorhandene Öffnung so groß, dass sich der zweite Gehäuseabschnitt mit Ausnahme des Flansches darin bewegen kann. Beispielsweise kann die Öffnung des Druckrings kreisförmig oder zylindrisch sein und einen Radius aufweisen, der (zumindest ein wenig) größer ist als ein Radius einer ebenfalls beispielsweise kreisförmigen oder zylindrisch gestalteten Außenseite des zweiten Gehäuseabschnitts, der aber kleiner ist als ein Außenradius des ebenfalls beispielsweise kreisförmigen oder zylindrisch gestalteten Flansches. Selbstverständlich kann die Öffnung des Druckrings, die Außenseite des zweiten Gehäuseabschnitts und/oder die Außenseite des Flansches oval oder mehreckig (beispielsweise 4-eckig oder 5-eckig oder anderweitig polygonal) sein. Auf jeden Fall kann der Druckring über den zweiten Gehäuseabschnitt gestülpt werden und entlang des zweiten Gehäuseabschnitts bewegt werden, bis der Druckring am Flansch anliegt.

Die Befestigung des Druckrings am ersten Gehäuseabschnitt kann beispielsweise durch mindestens eine Schraube oder Bolzen erfolgen. Zum Beispiel kann der Druckring mindestens eine Öffnung aufweisen, durch die jeweils eine Schraube oder ein Bolzen geführt werden kann, der in einer entsprechenden Öffnung im ersten Gehäuseabschnitt aufgenommen werden kann. Dabei kann in der Öffnung im ersten Gehäuseabschnitt ein Gewinde vorgesehen sein, in das die Schraube eingedreht wird, oder die Schraube wird über eine Mutter auf der anderen Seite des ersten Gehäuseabschnitts befestigt oder der Bolzen wird über einen Sicherungsstift auf der anderen Seite des ersten Gehäuseabschnitts befestigt.

Alternativ kann der Druckring in einem Abschnitt, der mit dem ersten Gehäuseabschnitt überlappt, auch ein Innengewinde aufweisen, dass zu einem an dem ersten Gehäuseabschnitt in dem Überlappungsbereich angebrachten Außengewinde korrespondiert. Somit kann der Druckring auf den ersten Gehäuseabschnitt aufgeschraubt werden, während der Druckring auf dem Flansch des zweiten Gehäuseabschnitts aufliegt und den zweite Gehäuseabschnitt auf den ersten Gehäuseabschnitt zubewegt.

Der Dichtkranz ist dabei so dimensioniert, dass er in einen Zwischenraum zwischen dem ersten Gehäuseabschnitt und dem Flansch ragt. Bei Befestigung des Druckrings an dem ersten Gehäuseabschnitt wird der Flansch auf den Teil des Dichtkranzes gepresst, der in den Zwischenraum ragt.

In einer weiteren Implementierungsvariante kann das Ventil ferner ein Dichtelement umfassen, das zwischen dem zweiten Gehäuseabschnitt und dem zweiten Spindelteil eine Dichtung angeordnet ist. Zum Beispiel kann das Dichtelement in Form eines 0-Rings auf dem zweiten Spindelteil angeordnet sein, der zudem eine Innenseite des zweiten Gehäuseabschnitt berührt. Dieses Dichtelement kann somit einen Bereich des Innenraums im zweiten Gehäuseabschnitt, in dem sich die erste Vertiefung und das zumindest teilweise sphärische Element befindet, von einem übrigen Bereich des Innenraums des zweiten Gehäuseabschnitts hermetisch abdichten.

Da durch den Dichtkranz eine Abdichtung gegenüber dem ersten Spindelteil bewirkt wird, ist der Bereich des Innenraums im zweiten Gehäuseabschnitt, der die erste Vertiefung und das zumindest teilweise sphärische Element beinhaltet, ringsherum hermetisch abgedichtet. Dies erlaubt das Einbringen eines Schmierstoffs zwischen das zumindest teilweise sphärische Element und die erste Vertiefung, um die Reibung dazwischen zu verringern.

In noch einer weiteren Implementierungsvariante kann die erste Vertiefung und/oder die zweite Vertiefung eine konische Vertiefung sein. Durch eine konische Vertiefung wird die Auflagefläche zwischen erster bzw. zweiter Vertiefung und dem zumindest teilweise sphärischen Element ringförmig ausgestaltet. Dies ermöglicht eine geringe Reibung zwischen den jeweiligen Elementen aber auch eine rotationsymmetrische Auflagefläche, wodurch eine lineare Kraft in Längsrichtung des ersten und zweiten Spindelteils optimal zwischen erstem und zweitem Spindelteil übertragen wird.

Alternativ oder zusätzlich kann die erste Vertiefung und/oder die zweite Vertiefung kronenförmig ausgebildet sein. Mit anderen Worten ist die Vertiefung in Radialrichtung (Umfangsrichtung um die Längsachse des ersten bzw. zweiten Spindelteils) nicht durchgängig, sondern wird durch einzelne zapfenförmige Elemente gebildet. Dadurch kann ein Auflager für das zumindest teilweise sphärische Element in Form von wenigen Punktlagern oder Lagern mit kleinen Flächen gebildet werden.

Optional können diese zapfenförmigen Elemente an ihren jeweiligen Enden abgerundet sein, insbesondere wenn dort das zumindest teilweise sphärische Element anliegt. Somit kann die Auflagefläche und damit die Reibung zwischen zumindest teilweise sphärischem Element und dem ersten bzw. zweiten Spindelteil weiter reduziert werden.

In einer anderen Implementierungsvariante kann das Ventil ferner einen Aktuator umfassen, der dazu eingerichtet ist, den zweiten Spindelteil zu drehen. Bei dem Aktuator kann es sich einerseits um einen Motor handeln. Andererseits kann der Aktuator auch durch einen Handgriff implementiert sein, der drehfest mit dem zweiten Spindelteil verbunden ist. Selbstverständlich können sowohl ein Motor als auch ein Handgriff vorgesehen sein, um das Ventil automatisch bzw. manuell zu bedienen.

In noch einer weiteren Implementierungsvariante kann das Ventil einen Faltenbalg, der den ersten Spindelteil umgibt, umfassen. Der Faltenbalg kann in Längsrichtung des ersten Spindelteils flexibel ausgestaltet sein. Beispielsweise kann der Faltenbalg aus einem Metall (einer Metallfolie) gefaltet werden, die in Umfangsrichtung durchgängig ist. Mit anderen Worten kann der Faltenbalg eine im Wesentlichen zylindrische Form aufweisen, wobei in Längsrichtung des Faltenbalgs zumindest in mindestens einem Abschnitt Faltungen vorgesehen sind, die zu der Flexibilität in Längsrichtung beitragen.

Ferner kann der Faltenbalg an einem ersten seiner Enden fluiddicht an dem Spindelteller befestigt sein und an einem zweiten Ende, das dem ersten Ende gegenüberliegt, fluiddicht an dem Dichtkranz befestigt sein. Dadurch dichtet der Faltenbalg den ersten Spindelteil hermetisch gegenüber einem Innenraum des ersten Gehäuseabschnitts ab. Fluiddicht bedeutet hier, dass der Faltenbalg an dem Spindelteller bzw. dem Dichtkranz so befestigt ist, dass das durch die Fluidleitung strömende Fluid nicht in das Innere des Faltenbalgs eindringen kann, insbesondere im Hinblick auf den Druck und/oder die Temperatur, die das strömende Fluid aufweisen kann.

Gemäß einem weiteren Aspekt zum besseren Verständnis der vorliegenden Offenbarung umfasst ein Druckbehälter für ein Fluid mindestens ein Ventil gemäß dem ersten Aspekt oder einer der zugehörigen Implementierungsvarianten und optionalen Ausgestaltungen.

Bei dem Druckbehälter kann es sich beispielsweise um standardisierte Gasdruckbehälter handeln, die einen ebenfalls standardisierten Ventilanschluss aufweisen. Zum Beispiel kann der Druckbehälter einen 25E-Anschluss (z.B. gemäß DIN 477 ISO 11363) aufweisen. Das mindestens eine Ventil kann, beispielsweise an dem ersten Gehäuseabschnitt, einen korrespondierenden 25E-Anschluss (DIN EN 629-1) aufweisen, sodass sich das Ventil als Standardabschlussorgan für Standarddruckbehälter einsetzen lässt.

Die oben beschriebenen Ausgestaltungen und Varianten können selbstverständlich kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

Bevorzugte Ausführungsformen der Erfindung werden nun anhand der beigefügten schematischen Zeichnungen näher erläutert, wobei
- Figur 1: schematisch eine Schnittansicht eines Ventils zeigt;
- Figur 2: schematisch eine Schnittansicht eines Details eines Ventils mit mehrteiliger Spindel zeigt;
- Figur 3: schematisch eine Schnittansicht eines Details eines Ventils mit einer anderen mehrteiligen Spindel zeigt; und
- Figur 4: schematisch eine Schnittansicht eines Gehäuseabschnitt eines Ventils zeigt.

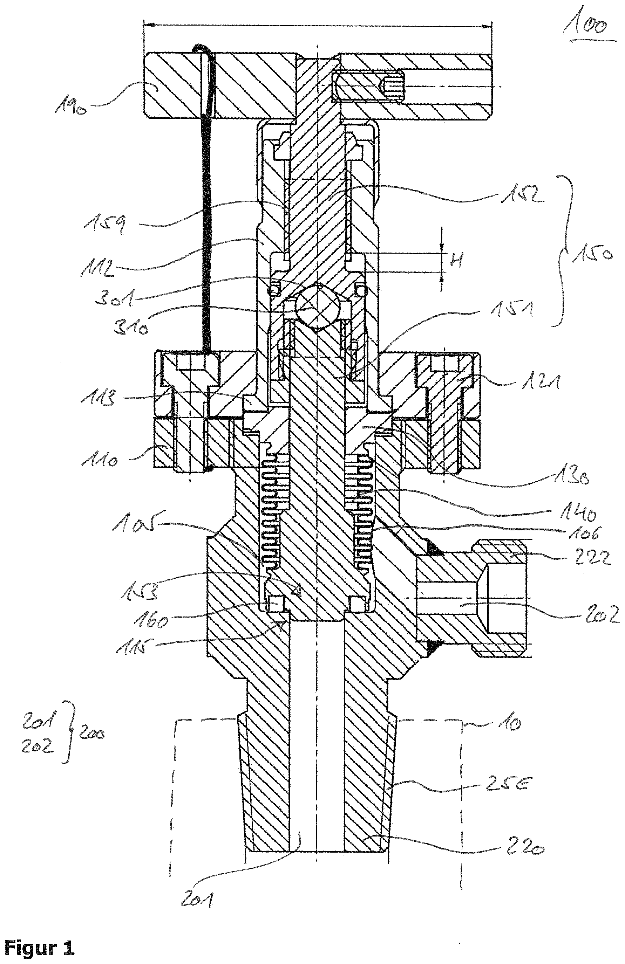

Figur 1 zeigt schematisch eine perspektivische Ansicht eines beispielhaften Ventils 100. Das Ventil 100 ist dazu eingerichtet, eine Fluidleitung 200 abzusperren, das heißt fluiddicht zu verschließen. Bei dem Fluid kann es sich um eine Flüssigkeit, ein Gas oder eine Kombination daraus handeln, wobei das Fluid für gewöhnlich unter Druck in einen ersten Abschnitt 201 der Fluidleitung 200 strömt, beispielsweise aus einem Drucktank 10 (in Figur 1 gestrichelt angedeutet). Bei geöffnetem Ventil 100 durchströmt das Fluid das Absperrorgan in dem Ventil 100 und tritt durch einen zweiten Abschnitt 202 der Fluidleitung 200 aus.

Das Ventil 100 kann einen ersten Gehäuseabschnitt 110 umfassen, in dem das eigentliche Absperrorgan des Ventils 100 angeordnet ist. Insbesondere bildet der erste Gehäuseabschnitt 110 einen Ventilsitz 115, der dazu eingerichtet ist, einen feststehenden Teil des Absperrorgans des Ventils 100 zu bilden.

Ein beweglicher Teil des Absperrorgan des Ventils 100 wird durch einen Spindelteller 153 gebildet, der dazu eingerichtet ist, von einer Schließstellung (siehe Figur 1) in eine Offenstellung (nicht gesondert dargestellt) bewegt zu werden. In der Schließstellung wird das Fluid daran gehindert, den ersten Abschnitt 201 der Fluidleitung 200 zu verlassen. In der Offenstellung des Spindeltellers 153 hingegen kann das Fluid durch den ersten Abschnitt 201 der Fluidleitung 200 strömen, den Spindelteller 153 passieren und durch den zweiten Abschnitt 202 der Fluidleitung 200 hinausströmen.

Ferner ist der Spindelteller 153 dazu eingerichtet, ein ringförmiges Dichtelement 160 aufzunehmen. Das ringförmige Dichtelement 160 liegt in der Schliessstellung des Spindeltellers 153 an dem Ventilsitz 115 an. Das ringförmige Dichtelement 160 kann aus einem elastischen Material, beispielsweise einem Kunststoff, hergestellt sein und dazu eingerichtet sein, mit dem Ventilsitz 115 eine Dichtwirkung gegenüber dem Fluid zu entwickeln.

Optional kann der Spindelteller 153 stirnseitig stufenförmig ausgebildet sein. Dabei kann ein Abschnitt der Stirnseite des Spindeltellers 153 in den ersten Abschnitt 201 der Fluidleitung 200 ragen, wenn sich der Spindelteller 153 in seiner Schliessstellung befindet. Dadurch kann bei geringer Bauhöhe des Ventils 100 eine sehr gute Dichtwirkung erzielt werden.

Neben dem Ventilsitz 115 bildet der erste Gehäuseabschnitt 110 eine Ventilkammer 105. In dieser Ventilkammer 105 kann sich der Spindelteller 153 bewegen. Beispielsweise kann der Spindelteller 153 Ausmaße aufweisen, die kleiner dimensioniert sind als die Innenmaße der Ventilkammer 105.

Ferner weist die Ventilkammer 105 eine Auslassöffnung 106 auf, an der der zweite Abschnitt 202 der Fluidleitung 200 beginnt. Dabei ist die Auslassöffnung 106 zumindest abschnittsweise in einem Bereich der Ventilkammer 105 angeordnet, der auf einer dem Ventilsitz 115 abgewandten Seite des Spindeltellers 153 liegt. Mit anderen Worten kann in der Offenstellung des Spindelteller 153 das Fluid zwischen Ventilsitz 115 und Spindelteller 153 vorbeiströmen, bevor es (in Bewegungsrichtung des Spindeltellers 153 betrachtet) die Auslassöffnung 106 erreicht. Dies ermöglicht einen nahezu symmetrischen Strömungsverlauf des Fluids um den Spindelteller 153, ein Durchströmen der Ventilkammer 105 und anschließendes Verlassen des Fluids durch die Auslassöffnung 106. Durch diesen Strömungsverlauf können Schwingungen am Spindelteller 153 und in dem Fluid vermieden oder zumindest verringert werden.

Das Ventil 100 kann einen zweiten Gehäuseabschnitt 112 aufweisen, der an einem dem Ventilsitz 115 des ersten Gehäuseabschnitts 110 zugewandten Ende einen Flansch 113 aufweist. Der Flansch 113 dient einer sicheren und dichten Befestigung des zweiten Gehäuseabschnitts 112 an dem ersten Gehäuseabschnitt 110.

Zum Beispiel kann das Ventil 100 einen Dichtkranz 130 aufweisen, der an einem dem Ventilsitz 115 gegenüberliegenden Ende des ersten Gehäuseabschnitts 110 zwischen dem ersten Gehäuseabschnitt 110 und dem zweiten Gehäuseabschnitt 112 angeordnet ist und deren Innenräume fluiddicht verschließt. Zum Beispiel kann der Dichtkranz 130 an dem Flansch 113 des zweiten Gehäuseabschnitts 112 anliegen. Durch den Dichtkranz 130 wird ferner die Ventilkammer 105 auf einer dem Spindelteller 153 abgewandten Seite verschlossen.

Die Befestigung des ersten Gehäuseabschnitts 110 an dem zweiten Gehäuseabschnitt 112 kann beispielsweise durch einen Druckring 120 erfolgen. Der Druckring 120 ist dazu eingerichtet, an dem ersten Gehäuseabschnitts 110 befestigt zu werden und den zweiten Gehäuseabschnitts 112 zumindest abschnittsweise zu umgeben. Die Befestigung an dem ersten Gehäuseabschnitt 110 kann zum Beispiel mittels einer oder mehrerer Schrauben 121 erfolgen, die in den ersten Gehäuseabschnitt 110 geschraubt werden und dabei den Druckring 120 sowohl auf den ersten Gehäuseabschnitt 110 als auch den Flansch 113 des zweiten Gehäuseabschnitts 112 drücken. Alternativ kann der Druckring 120 auch haubenförmig ausgestaltet sein (nicht dargestellt) und auf den ersten Gehäuseabschnitt 110 aufgeschraubt werden.

Die Bewegung des Spindeltellers 153 zwischen seiner Schliessstellung und seiner Offenstellung kann dadurch erzielt werden, dass die Spindel 150 in einem Gewinde 159, zum Beispiel in dem zweiten Gehäuseabschnitt 112, geführt wird. Durch Drehen der Spindel 150, beispielsweise durch den Aktuator 190 (hier beispielhaft als Handgriff dargestellt) kann die Spindel 150 einen Hub H aufweisen. Dieser Hub H, also eine lineare Bewegung in Längsrichtung der Spindel 150, wird auf den Spindelteller 153 übertragen, sodass dieser zwischen Offenstellung und Schliessstellung bewegt wird.

Insbesondere kann die Spindel 150 aus einem ersten Spindelteil 151 und einem zweiten Spindelteil 152 bestehen. An dem ersten Spindelteil 151 ist der Spindelteller 153 ausgebildet. Der erste Spindelteil 151 und/oder der zweite Spindelteil 152 weist an einem dem jeweils anderen Spindelteil 151, 152 zugewandten Ende eine erste Vertiefung 301, 302 auf. In dieser Vertiefung ist ein zumindest teilweise sphärisches Element 310 angeordnet, welches sich relativ zu der ersten Vertiefung 301, 302 drehen kann. Dadurch wird eine Drehbewegung zwischen dem ersten Spindelteil 151 und dem zweiten Spindelteil 152 entkoppelt. Beispielsweise kann die Drehbewegung des zweiten Spindelteils 152 in dem Gewinde 159 von dem ersten Spindelteil 151 entkoppelt werden. Dadurch wird der erste Spindelteil 151 und somit der Spindelteller 153 nur linear in Längsrichtung der Spindel 150 bewegt, wodurch die Dichtelemente am Spindelteller 153 geschont werden.

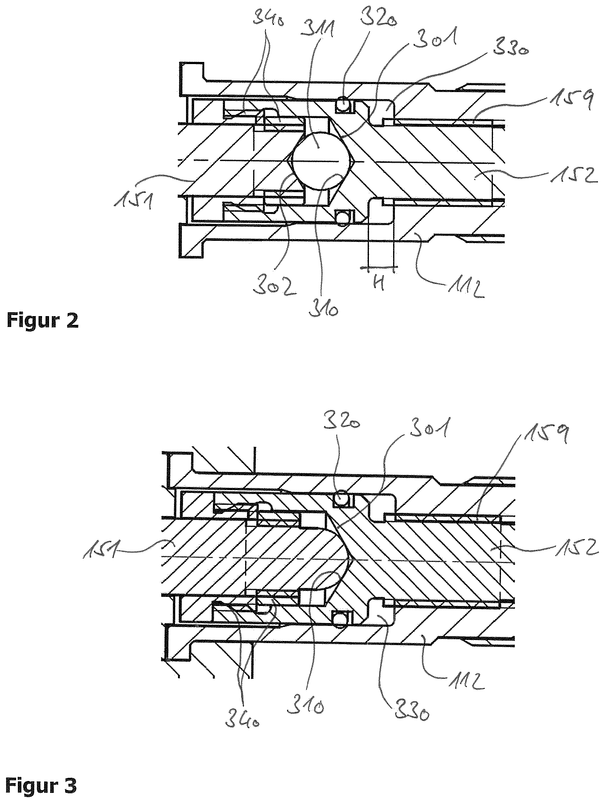

In den Figuren 2 und 3 sind zwei Beispiele für das zumindest teilweise sphärische Element 310 dargestellt. In Figur 2 ist das zumindest teilweise sphärische Element 310 eine Kugel 311. Mit anderen Worten handelt es sich um ein vollständig sphärisches Element 311. Ein Teil der Sphäre der Kugel 311 liegt in der ersten Vertiefung 301, hier einer Vertiefung in dem zweiten Spindelteil 152 an. Durch die Form der Kugel 311 und der Vertiefung 301 ist die Auflagefläche zwischen dem zweiten Spindelteil 152 und der Kugel 311 ringförmig.

Entsprechend kann auch der andere Spindelteil 151, 152, hier der erste Spindelteil 151, eine zweite Vertiefung 302 aufweisen, in der die Kugel 311 angeordnet ist. Auch hier ist eine Auflagefläche zwischen dem ersten Spindelteil 151 und der Kugel 311 ringförmig. Dadurch kann sich die Kugel sowohl in der ersten Vertiefung 301 als auch der zweiten Vertiefung 302 drehen, wodurch insbesondere eine Drehbewegung des zweiten Spindelteils 152 in dem Gewinde 159 an der Kugel 311 nicht auf den ersten Spindelteil 151 übertragen wird.

In dem Beispiel gemäß Figur 3 ist das teilweise sphärische Element 310 an einem Ende des anderen Spindelteils 151, 152, hier an einem Ende des ersten Spindelteils 151, ausgebildet. Zum Beispiel kann das Ende, das dem zweiten Spindelteil 152 zugewandt ist, so bearbeitet werden, dass es das zumindest teilweise sphärische Element 310 bildet. Lediglich beispielhaft kann das Ende des ersten Spindelteils 151 durch Fräsen oder ähnlichen abrasiven Vorgang zu dem teilweise sphärischen Element 310 geformt werden. Dieses Kupplungsglied zwischen erstem und zweitem Spindelteil 151, 152 reduziert ebenfalls deutlich die Reibung zwischen erstem und zweitem Spindelteil 151, 152, ist in seinem Aufbau aber sehr einfach gehalten.

Des Weiteren kann ein Innenraum 330 des zweiten Gehäuseabschnitts 112 hermetisch abgedichtet werden, um beispielsweise ein Schmiermittel zwischen dem zumindest teilweise sphärischen Element 310 und der ersten Vertiefung 301 und/oder der zweiten Vertiefung 302 einbringen zu können. So kann ein Dichtelement 320, beispielsweise in Form eines O-Rings, an einer Innenseite des Gehäuseabschnitts 112 und einer Außenseite des zweiten Spindelteils 152 angeordnet werden.

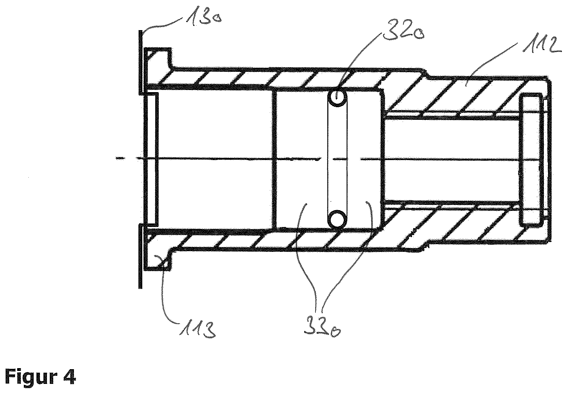

Wie insbesondere im Hinblick auf Figur 4 gezeigt ist, wird der Innenraum 330 des zweiten Gehäuseabschnitts 112 auf der einen Seite durch den Dichtkranz 130 abgedichtet und durch das Dichtelement 320 in zwei Bereiche unterteilt, die hermetisch voneinander abgedichtet sind. In Figur 4 ist zur klareren Darstellung keines der Spindelteil der 151, 152 dargestellt. Das Dichtelement 320 und der Dichtkranz 130 dichten den in Figur 4 linken Bereich des Innenraums 330 gegenüber dem zweiten Spindelteil 152 bzw. gegenüber dem ersten Spindelteil 151 hermetisch ab.

Dies hat neben der Abdichtwirkung auch den Vorteil, dass Schmierstoffe oder Abrieb oder Ähnliches von der Spindel und/oder dem zumindest teilweise sphärischen Element 310 nicht in die Ventilkammer 105 gelangen, insbesondere nicht in den medienseitigen, von Fluid durchströmten, Bereich der Ventilkammer 105.

Ferner kann der Dichtkranz 130 so gestaltet sein, dass der erste Spindelteil 151 darin in Längsrichtung geführt werden kann (siehe insbesondere Figur 1). Somit kann der Dichtkranz 130 eine bestimmte Dicke aufweisen, wodurch ein Kippen des ersten Spindelteils 151 (in Abweichung von seiner Längsachse) verhindert werden kann. Dadurch ist kein gesondertes Lager für den ersten Spindelteil 151 notwendig.

Optional können noch weitere Dichtelemente 340 zwischen dem ersten und zweiten Spindelteil 151, 152 vorgesehen sein, um den Bereich, in dem sich das zumindest teilweise sphärisches Element 310 befindet, weiter abzudichten. Hierbei kann zum Beispiel der zweite Spindelteil 152 eine haubenförmige Verlängerung aufweisen, die sich über das zumindest teilweise sphärische Element 310 und einen Teil des ersten Spindelteils 151 erstreckt. Mit anderen Worten gibt es einen Überlappungsbereich zwischen erstem und zweitem Spindelteil 151, 152. Die weiteren Dichtelement der 340 können in diesem Überlappungsbereich zwischen dem ersten und zweiten Spindelteil 151, 152 angeordnet sein. Hierbei sollte eine gute Gleitfähigkeit zwischen erstem und zweitem Spindelteil 151, 152 gegeben sein, um die Drehbewegung des zweiten Spindelteils 152 nicht auf den ersten Spindelteil 151 zu übertragen.

Die oben beschriebenen Ausführungsbeispiele und Varianten dienen nur der Veranschaulichung der Erfindung. Alle Beispiele, Varianten und einzelne Details können beliebig miteinander kombiniert werden, um bestimmte Ausführungsformen der Erfindung zu bilden.

## Patentansprüche

1. Ventil (100) für eine Fluidleitung (200), wobei das Ventil (100) umfasst:
einen Ventilsitz (115);
einen Spindelteller (153), der dazu eingerichtet ist, von einer Schließstellung, in der der Spindelteller (153) fluiddicht auf dem Ventilsitz (115) aufsitzt, zu einer Offenstellung, in der der Spindelteller (153) von dem Ventilsitz (115) entfernt ist, bewegt zu werden;
einen ersten Spindelteil (151), an dem der Spindelteller (153) ausgebildet ist; und
einen zweiten Spindelteil (152), der auf einer dem Spindelteller (153) gegenüberliegenden Seite des ersten Spindelteils (151) angeordnet ist,
**dadurch gekennzeichnet,**
**dass** der erste Spindelteil (151) oder der zweite Spindelteil (152) eine dem jeweils anderen Spindelteil (151, 152) zugewandte erste Vertiefung (301) aufweist, und
**dass** ein zumindest teilweise sphärisches Element (310) in der ersten Vertiefung (301) angeordnet ist und dazu eingerichtet ist, sich relativ zu der ersten Vertiefung (301) zu drehen.

2. Ventil (100) gemäß Anspruch 1, wobei das zumindest teilweise sphärische Element (310) eine Kugel (311) ist, und
wobei das andere des ersten oder zweiten Spindelteils (151, 152) eine zweite Vertiefung (302) aufweist, in der die Kugel (311) angeordnet ist.

3. Ventil (100) gemäß Anspruch 1, wobei das zumindest teilweise sphärische Element (310) an einem der ersten Vertiefung (301) zugewandten Ende des anderen des ersten oder zweiten Spindelteils (151, 152) ausgebildet ist.

4. Ventil (100) gemäß einem der Ansprüche 1 bis 3, ferner umfassend:
einen ersten Gehäuseabschnitt (110), der den Ventilsitz (115) bildet;
einen zweiten Gehäuseabschnitt (112), der an einem dem Ventilsitz (115) zugewandten Ende einen Flansch (113) aufweist; und
einen Druckring (120), der dazu eingerichtet ist, an dem ersten Gehäuseabschnitt (110) befestigt zu werden und den zweiten Gehäuseabschnitt (112) zumindest abschnittsweise zu umgeben und den Flansch (113) des zweiten Gehäuseabschnitts (112) in Richtung des ersten Gehäuseabschnitts (110) zu halten.

5. Ventil (100) gemäß Anspruch 4, wobei der zweite Spindelteil (152) in dem zweiten Gehäuseabschnitt (112) so gelagert ist, dass er durch Drehen eine Bewegung in Längsrichtung des zweiten Spindelteils (152) ausführt, wobei vorzugsweise der zweite Gehäuseabschnitt (112) ein Gewinde (159) aufweist, in dem ein korrespondierendes Gewinde des zweiten Spindelteils (152) eingreift.

6. Ventil (100) gemäß Anspruch 5, wobei der erste Spindelteil (151) in dem ersten Gehäuseabschnitt (110) und/oder dem zweiten Gehäuseabschnitt (112) so gelagert ist, dass er sich in Längsrichtung des ersten Gehäuseabschnitts (110) bewegt, und wobei das zumindest teilweise sphärische Element (310) und die erste Vertiefung (301) die Bewegung des zweiten Spindelteils (152) in dessen Längsrichtung auf den ersten Spindelteil (151) übertragen und die Drehbewegung des zweiten Spindelteils (152) nicht auf den ersten Spindelteil (151) übertragen.

7. Ventil (100) gemäß einem der Ansprüche 4 bis 6, ferner umfassend:
einen Dichtkranz (130), der eine Öffnung (133), durch die der erste Spindelteil (151) ragt, und eine Dichtfläche (132), die ein dem Ventilsitz (115) gegenüberliegendes Ende des ersten Gehäuseabschnitts (110) fluiddicht verschließt, aufweist.

8. Ventil (100) gemäß einem der Ansprüche 4 bis 7, ferner umfassend:
ein Dichtelement (320), das zwischen dem zweiten Gehäuseabschnitt (112) und dem zweiten Spindelteil (152) angeordnet ist und dazu eingerichtet ist, zwei Bereiche in einem Innenraum (330) des zweiten Gehäuseabschnitt (112) hermetisch abzudichten.

9. Ventil (100) gemäß einem der Ansprüche 1 bis 8, wobei die erste Vertiefung (301) und/oder die zweite Vertiefung (302) eine konische Vertiefung ist

10. Ventil (100) gemäß einem der Ansprüche 1 bis 8, ferner umfassend:
einen Aktuator (190), der dazu eingerichtet ist, den zweiten Spindelteil (152) zu drehen.
